# EUROPÄISCHE PATENTSCHRIFT

(11) **EP 0 455 949 B1**
(45) Veröffentlichungstag und Bekanntmachung des Hinweises auf die Patenterteilung: **20.10.1993**
(21) Anmeldenummer: 91103363.7
(22) Anmeldetag: 06.03.1991
(51) Int. Cl.: E21B 7/28, E21B 7/26, E21B 7/20, E21B 29/00, F16L 1/028, E03F 3/06

(54) **Rammbohrgerät zum zerstörenden Ersetzen erdverlegter Rohrleitungen**
Boring ram for the destructive replacement of a buried pipe
Mouton de forage pour le remplacement par destruction d'une conduite enterrée

(30) Priorität: 09.05.1990 DE 4014775
(43) Veröffentlichungstag der Anmeldung: 13.11.1991
(73) Patentinhaber: TRACTO-TECHNIK PAUL SCHMIDT, MASCHINENFABRIK KG, 57368 Lennestadt (DE)
(72) Erfinder: Hesse, Alfons, Dipl.-Ing., W-5940 Lennestadt 11 (DE)
(74) Vertreter: König, Reimar, Dr.-Ing.

(56) Entgegenhaltungen:
- DE-C- 3 902 081
- DE-C- 3 910 354
- DE-U- 8 716 205
- FR-A- 2 314 309
- GB-A- 2 164 411

## Beschreibung

Die Erfindung betrifft ein Rammbohrgerät zum zerstörenden Ersetzen erdverlegter Rohrleitungen mit einem Gerätegehäuse, einem Aufweitkonus am Heck des Gerätegehäuses sowie mit Abstand davor angeordneten Schneiden.

In der deutschen Patentschrift 39 02 081 ist ein derartiges Rammbohrgerät beschrieben, bei dem Schneiden an einem Zertrümmerungskopf angeordnet sind, der mit dem Gehäuse des Rammbohrgerätes über ein zug- und druckfestes Kardangelenk verbunden ist, um die Kurvengängigkeit zu gewährleisten.

Während somit die die Rohrleitung aufreißenden Schneiden von der Spitze des Rammbohrgerätes angeordnet sind, ist der Aufweitkonus am Heck des Gerätegehäuses angeordnet und fest mit diesem verbunden.

Die Schneiden am Zertrümmerungskopf lassen sich nur einzeln auswechseln, oder der ganze Zertrümmerungskopf muß an seiner Kardangelenkverbindung mit dem Rammbohrgerät gelöst und ausgewechselt werden. Dieser Zertrümmerungskopf läßt sich zwar an den Durchmesser unterschiedlicher Altrohre anpassen, jedoch ist der Aufweitkonus fest mit dem Gehäuse des Rammbohrgeräts verbunden, so daß ein Anpassen an den Durchmesser des einzuziehenden Rohres nur mit einem dem Rohrdurchmesser entsprechenden Rammbohrgerät möglich ist.

Schließlich ist auch keine ausreichende Führung des Geräts, insbesondere nicht beim Einlauf in das zu zertrümmernde Rohr gewährleistet, da durch das Kardangelenk zwischen dem Zertrümmerungskopf und dem Rammbohrgerät ein Ausweichen in jede Richtung möglich ist, so daß eine aufwendige Lafette zum Führen des Rammbohrgerätes und zusätzlich ein Seilzug durch das Altrohr hindurch erforderlich sind.

Der Erfindung liegt die Aufgabe zugrunde, ein Rammbohrgerät zum zerstörenden Ersetzen erdverlegter Rohrleitungen zu schaffen, das von Anfang an eine einwandfreie Führung im Altrohr gewährleistet, ein einfaches Anpassen an den Altrohrdurchmesser und den Durchmesser des neuen Rohres ermöglicht sowie das Problem des Auswechselns verschlissener Schneiden löst.

Ausgehend von dieser Aufgabenstellung wird vorgeschlagen, daß bei einem Gerät der eingangs erwähnten Art erfindungsgemäß der Aufweitkonus auf das Gehäuse aufgesteckt ist, daß die Schneiden Teil eines ebenfalls auf das Gehäuse aufgesteckten Zertrümmerungskopfes sind und ein Teil des Gerätegehäuses aus dem Zertrümmerungskopf nach vorne ragt. Auf diese Weise wird ein einfaches Anpassen an den Durchmesser des zu zertrümmernden Rohres und ein einfaches Auswechseln verschlissener Schneiden ermöglicht. Der Zertrümmerungskopf läßt sich problemlos aufstecken und abnehmen. In ebensolcher Weise läßt sich der Aufweitkonus auf das Gehäuse des Rammbohrgeräts aufstecken und wieder abnehmen, so daß sich der Zertrümmerungskopf und der Aufweitkonus unabhängig voneinander vom Rammbohrgerät abnehmen lassen.

Der Zertrümmerungskopf kann aus einer zylindrischen Hülse mit radialen Schneiden bestehen.

Am hinteren Ende des Aufweitkonus kann eine Halterung für ein Nachziehrohr angeordnet sein, so daß das Zertrümmern der Altleitung im mittleren, zylindrischen Bereich des Gehäuses des Rammbohrgeräts stattfindet, während durch den am hinteren Ende des Gerätegehäuses angeordneten Aufweitkonus das Erdreich aufgeweitet und die Reste der zertrümmerten Altleitung radial verdrängt werden, so daß ein gleichzeitiges Nachziehen eines Neurohres größeren Durchmessers möglich ist.

Besonders einfach ist der Aufbau des erfindungsgemäßen Gerätes, wenn sich die zylindrische Hülse des Zertrümmerungskopfes an einem vorderen Ansatz des Aufweitkonus abstützt, sich über die Mitte des Gehäuses des Rammbohrgeräts nach vorne erstreckt und die Schneiden am vorderen Ende der Hülse mit Abstand zum Aufweitkonus angeordnet sind. In diesem Fall dient die zylindrische Hülse als Abstandshalter zwischen den Schneiden und dem Aufweitkonus, der sich seinerseits an einer entsprechenden Aufweitung des Gerätegehäuses abstützt. Wenn die Schneiden des Zertrümmerungskopfes etwas vor dem mittleren Bereich des zylindrischen Gerätegehäuses angeordnet sind, ist ein genügender Abstand zwischen den Schneiden und dem Aufweitkonus gewahrt, während andererseits noch ein genügend langer Teil des zylindrischen Gerätegehäuses aus dem Zertrümmerungskopf heraus nach vorne ragt und die Führung im Altrohr übernimmt.

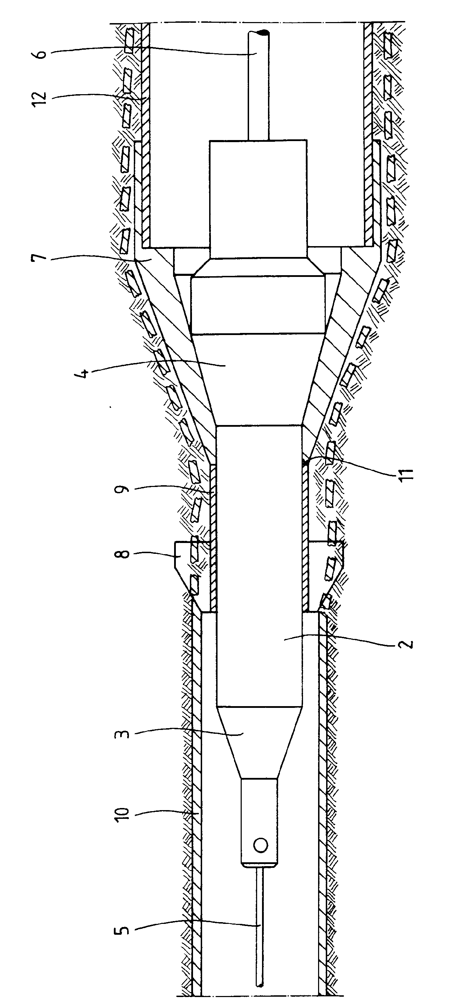

Die Erfindung wird nachstehend anhand eines in der Zeichnung dargestellten Ausführungsbeispiels des näheren erläutert.

Ein Rammbohrgerät 1 weist ein zylindrisches Gehäuse 2, eine konische Spitze 3 und am Heck eine konische Erweiterung 4 auf. An der konischen Spitze 3 ist ein durch ein Altrohr 10 geführtes Zugseil 5 befestigt. Das hintere Ende des Rammbohrgeräts 1 ist mit einem Druckluftschlauch 6 verbunden.

Ein auswechselbarer Aufweitkonus 7 sitzt auf dem konischen Ende 4 des Rammbohrgeräts 1. Des weiteren sitzt ein Zertrümmerungskopf aus radial abstehenden Schneiden 8 und einer zylindrischen Hülse 9 auf dem zylindrischen Gehäuse 2. Die Hülse 9 stützt sich mit ihrem hinteren Ende an einem vorderen Ansatz 11 des Aufweitkonus 7 ab.

Die zylindrische Hülse 9 ist so lang, daß die an ihrem vorderen Ende angeordneten Schneiden 8 einen ausreichend großen Abstand zum Aufweitkonus 7 besitzen und vor der Mitte des Rammbohrgeräts 1 liegen.

Ein Nachziehrohr 12 mit einem größeren Durchmesser als das zu zertrümmernde Altrohr 10 ist mittels nicht dargestellter Halterungen am Aufweitkonus 7 befestigt.

Der vor den Schneiden 8 liegende zylindrische Teil des Rammbohrgeräts 1 mit der konischen Spitze 3 übernimmt die Führung in dem zu zertrümmernden Altrohr 10, was insbesondere beim Ansetzen des Rammbohrgeräts 1 zu Beginn eines Zertrümmerungsvorganges wichtig ist.

Beim Vortrieb erfassen zunächst die Schneiden 8 das Altrohr 10 und zerlegen es durch die vom Rammbohrgerät 1 ausgeübten Schläge in kleine Teile. Der am Ende des Rammbohrgeräts 1 angeordnete Aufweitkonus 7 erweitert anschließend die Bohrung soweit, daß sich das Nachziehrohr 12 ohne wesentliche Reibung in die Bohrung einführen läßt.

Da der Zertrümmerungskopf aus den Schneiden 8 und der zylindrischen Hülse 9 jeweils auf den Durchmesser des zu zertrümmernden Altrohrs 10 abgestimmt ist, was durch einfaches Aufstecken eines entsprechenden Zertrümmerungskopfes geschieht, läßt sich die Führung des Rammbohrgeräts 1 im Altrohr 10 noch weiter verbessern, wenn die zylindrische Hülse 9 mit einem dem Innendurchmesser des Altrohrs 10 im wesentlichen entsprechenden Außendurchmesser über die Schneiden 8 nach vorne hinaus verlängert ist. Dies ist allerdings nur dann erforderlich, wenn der Innendurchmesser des Altrohrs 10 wesentlich größer ist als der Außendurchmesser des Rammbohrgeräts 1.

## Patentansprüche

1. Rammbohrgerät zum zerstörenden Ersetzen erdverlegter Rohrleitungen mit einem Gerätegehäuse, einem Aufweitkonus am Heck des Gerätegehäuses sowie mit Abstand davor angeordneten Schneiden, dadurch gekennzeichnet, daß der Aufweitkonus (7) auf das Gerätegehäuse (2) aufgesteckt ist, daß die Schneiden (8) Teil eines ebenfalls auf das Gerätegehäuse (2) aufgesteckten Zertrümmerungskopfes (8, 9) sind und ein Teil des Gerätegehäuses (2) aus dem Zertrümmerungskopf (8, 9) nach vorne ragt.

2. Rammbohrgerät nach Anspruch 1, dadurch gekennzeichnet, daß der Zertrümmerungskopf aus einer Hülse (9) mit radialen Schneiden (8) besteht.

3. Rammbohrgerät nach Anspruch 2, dadurch gekennzeichnet, daß sich die zylindrische Hülse (9) an einem vorderen Ansatz (11) des Aufweitkonus (7) abstützt, sich über die Mitte des Gehäuses (2) des Rammbohrgeräts (1) nach vorne erstreckt und die Schneiden (8) am vorderen Ende der Hülse (9) mit Abstand zum Aufweitkonus (7) angeordnet sind.

4. Rammbohrgerät nach Anspruch 3, dadurch gekennzeichnet, daß sich die zylindrische Hülse (9) über die Schneiden (8) hinaus nach vorne erstreckt.

## Claims

1. A percussion boring machine for destructive replacement of buried pipelines, having an opening-out cone at the back of the machine housing and cutters spaced in front of it, characterised in that the opening-out cone (7) is slipped on to the machine housing (2), that the cutters (8) form part of a breaking-up head (8, 9) likewise slipped on to the housing and that part of the machine housing (2) projects forwards from the breaking-up head (8, 9).

2. A percussion boring machine according to claim 1, characterised in that the breaking-up head comprises a sleeve (9) with radial cutters (8).

3. A percussion boring machine according to claim 2, characterised in that the cylindrical sleeve (9) is supported on a front extension (11) of the opening-out cone (7) and extends forwards beyond the middle of the housing (2) of the percussion boring machine (1), and the cutters (8) are located at the front end of the sleeve (9) and spaced from the opening-out cone (7).

4. A percussion boring machine according to claim 3, characterised in that the cylindrical sleeve (9) extends forward beyond the cutters (8).

## Revendications

1. Mouton de forage pour le remplacement par destruction de conduites enterrées, comportant un carter, un cone d'élargissement à l'arrière du carter ainsi que des tranchants agencés à distance devant ledit cône d'élargissement, caractérisé en ce que le cone d'élargissement (7) est emboîté sur le carter (2), en ce que les tranchants (8) font partie d'une tête de destruction (8, 9) qui est également emboîtée sur le carter (2), et en ce qu'une partie du carter (2) fait saillie vers l'avant par rapport à la tête de destruction (8,9).

2. Mouton de forage selon la revendication 1, caractérisé en ce que la tête de destruction consiste en une douille (9) munie de tranchants radiaux (8).

3. Mouton de forage selon la revendication 2, caractérisé en ce que la douille cylindrique (9) prend appui sur un épaulement avant (11) du cone délargissement (7) et s'étend vers l'avant au-delà du milieu du carter (2) du mouton de forage (1), et en ce que les tranchants (8) sont agencés à l'extrémité avant de la douille (9) à distance du cone d'élargissement (7).

4. Mouton de forage selon la revendication 3 caractérisé en ce que la douille cylindrique (9) s'étend vers l'avant au de-delà des tranchants (8).
